Europäisches Patentamt

European Patent Office

Office européen des brevets

(19)

(11) Publication number: **0 187 664**
A2

(12) # EUROPEAN PATENT APPLICATION

(21) Application number: **86100183.2**

(22) Date of filing: **08.01.86**

(51) Int. Cl.⁴: **G 11 B 7/00**
**G 11 B 7/013, G 11 B 7/125**

(30) Priority: **09.01.85 JP 1781/85**

(43) Date of publication of application:
**16.07.86 Bulletin 86/29**

(84) Designated Contracting States:
**DE FR GB**

(71) Applicant: **VICTOR COMPANY OF JAPAN, LIMITED**
**3-12, Moriya-cho**
**Kanagawa-ku Yokohama(JP)**

(72) Inventor: **Tatsuguchi, Kazuo**
**8-18-17, Seishin**
**Sagamihara-shi Kanagawa-ken(JP)**

(74) Representative: **Grams, Klaus Dieter, Dipl.-Ing. et al,**
**Patentanwaltsbüro Tiedtke-Bühling-Kinne-**
**Grupe-Pellmann-Grams-Struif Bavariaring 4**
**D-8000 München 2(DE)**

(54) **Optical arrangement for forming an elongated laser beam spot on erasable optical disks.**

(57) Disclosed is an optical arrangement for erasing information recorded on erasable optical disks. The arrangement comprises a laser, a cylindrical lens and an objective lens, the objective lenses being arranged to focus a laser beam emitted from the laser on the disk in a first direction and the cylindrical lens being arranged to defocus it on the disk in a second direction perpendicular to the first direction to form a light spot on the disk which is elongated in the direction of rotation of the disk. Preferably, the cylindrical and objective lenses are located with respect to the disk so that the laser beam is focused in the second direction at a point spaced from the near side of the disk.

FIG.3A

FIG.3B

EP 0 187 664 A2

0187664

## TITLE OF THE INVENTION

"Optical Arrangement for Forming an Elongated Laser
Beam Spot on Erasable Optical Disks"

## BACKGROUND OF THE INVENTION

The present invention relates to an optical arrangement for generating an elongated beam spot on an erasable optical disk for erasing information recorded in the form of phase changes between amorphous and crystalline states.

A new approach to mass storage informatin read/write systems is toward using erasable optical disks. Such disks comprise a phase-changing medium such as an alloy of TeOx, Ge and Sn. Application of an information-bearing, pulsed laser beam to the disk causes a reversal of phase to occur in localized areas from a crystalline state having high reflectivity to an amorphous state having low reflectivity. The recorded information is read by application of a low intensity beam spot to the medium and detecting the intensity of light returning from areas of different reflectivities. The information can be erased by heating the medium and gradually cooling it off. This is currently accomplished by irradiating the information-bearing medium with a beam spot elongated in the direction of movement of the medium.

A number of optical arrangements for forming such an elongated beam spot have been proposed.  In one example of the prior art arrangements, a triangular prism is located in the path of a parallel laser beam between a collimating lens and an objective lens.  The beam's cross-section elongates in one direction on passing through the planes of the prism and the beam path is bent by the prism.  This results in an arrangement which is complex in design, difficult to calibrate and has inherent limitations on the length of elongation due to critical angle of incidence.  A second example involves the use of a slitted plate through which a collimated laser beam is passed for trimming its cross-section into elongated form.  Since a greater proportion of the energy is lost by the trimming, a very high energy output laser is required.  Another example uses a pair of orthogonally oriented cylindrical lenses successively arranged in the path of an information-bearing laser beam directed to the surface of a photosensitive medium of a capacitance detection master disk.  The beam is elongated on the record medium in one direction to produce a rectangular light spot having sharply defined straight edges on all its sides.  The direction of elongation of the light spot is perpendicular to the direction of rotation of the master disk, so that the information is recorded in the form of successively arranged microscopic rectangular areas. However, the use of two cylindrical lenses has proven impractical for mass production as it requires extremely difficult calibration.

## SUMMARY OF THE INVENTION

Therefore, it is an object of the present invention to provide an optical arrangement for forming a laser beam spot of elongated cross-section for use in erasing information recorded on erasable optical disks. Specifically, the optical arrangement of the invention ensures ease with which it can be designed, provides a greater freedom of design choice, provides a laser beam spot with a greater length of elongation than is possible with any of the prior art arrangements with a ratio of longer to shorter dimensions of the beam spot being 100:1, and ensures high energy efficient operation.

According to the invention, there is provided an arrangement for optically erasing information recorded on erasable optical disks, comprising a laser, a cylindrical lens and an objective lens, the objective lens being arranged to focus a laser beam emitted from the laser on the disk in a first direction and said cylindrical lens being arranged to defocus the laser beam on the disk in a second direction perpendicular to the first direction to form a light spot on the disk which is elongated in the direction of rotation of the disk.

Preferably, the cylindrical and objective lenses are located with respect to the disk so that the laser beam is focused in the second direction at a point spaced on the near side from the disk.

The optical arrangement of the invention can advantageously be incorporated in a recording apparatus which comprises a first laser for emitting an information bearing  write beam which is focused on the disk to form a first, information-bearing beam spot.  A cylindrical lens and a objective lens are located in the path of an erase beam, the objective lens being arranged to focus it on the disk in a first direction and the cylindrical lens being arranged to defocus it on the disk in a second direction perpendicular to the first direction to form a second, elongated light spot adjacent the first beam spot, the direction of elongation of the second light spot being parallel to the direction of rotation of the disk.

There is provided an apparatus comprising a first laser for emitting an information bearing write beam for writing information on an erasable optical disk, a collimating lens located in the path of the write beam, a second laser for emitting an erase beam in a direction perpendicular to the direction of path of the write beam, and a cylindrical lens located in the path of the erase beam.  A beam splitter is located at an intersection of the paths of the write and erase beams for combining the write beam leaving the collimating lens with the erase beam leaving the cylindrical lens and directing the combined beams toward the disk through an objective lens which focus the write beam on the disk to form an information-bearing light spot. The objective lens is arranged to focus the erase beam on the disk in a first direction and the cylindrical lens is arranged to defocus it on the disk in a second direction perpendicular to the first direction to form an elongated light spot in a position ahead of the information-bearing light spot.

## BRIEF DESCRIPTION OF THE DRAWINGS

The present invention will be described in further detail with reference to the accompanying drawings, in which:

Fig. 1 is a schematic diagrammatic view of a read/write apparatus for erasable optical disks;

Fig. 2 is an illustration of details of the optical unit of Fig. 1, and Fig. 2a is an illustration of write and erase beam spots on the erasabel optical disk;

Figs. 3A and 3B are illustrations useful for an understanding of the present invention; and

Figs. 3C and 3D are illustrations of a modification of the invention;

Figs. 4A to 7B are illustrations of various modifications of the present invention.

- 6 -

## DETAILED DESCRIPTION

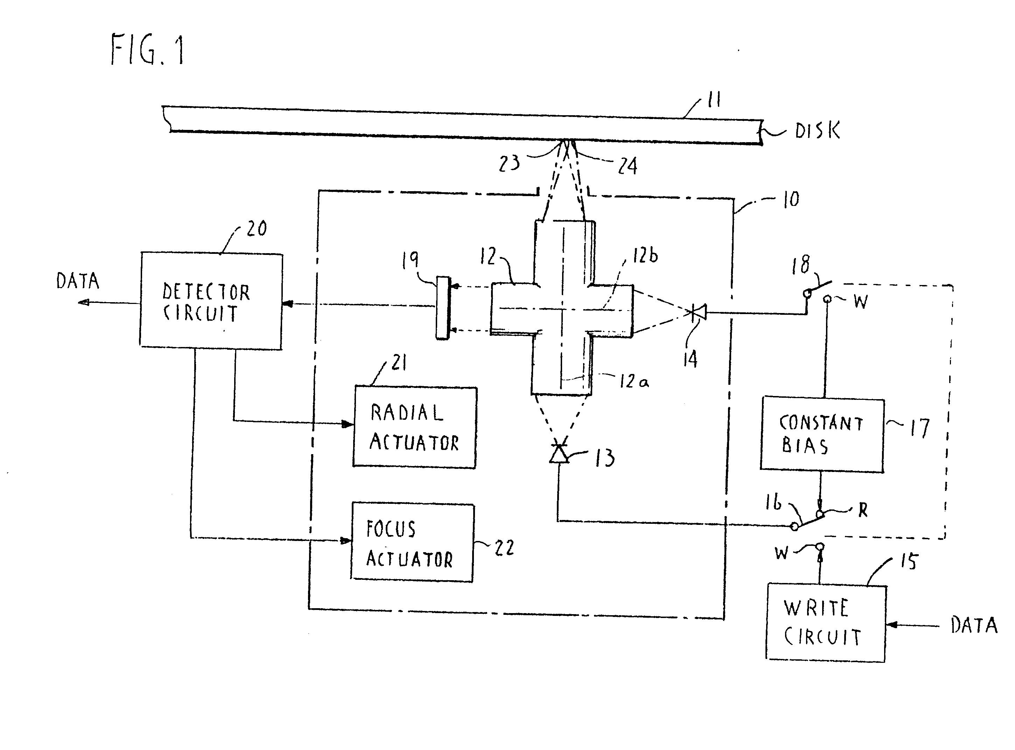

In Fig. 1, there is schematically shown a read/write apparatus of the invention for phase-changing erasable optical disks. The apparatus includes an optical unit 10 movably mounted in radial directions of an erasable optical disk 11 on a suitable drive means such as used in "compact disc" players. Optical unit 10 comprises a lens unit 12 having a vertical optical axis 12a and a horizontal optical axis 12b. Lens unit 12 receives a read/write laser beam emitted from a laser diode 13 located in alignment with the vertical optical axis 12a and an erasing laser beam from a laser diode 14 located on the horizontal optical axis 12a.

Read/write laser diode 13 is driven by a data signal coupled from a write circuit 15 during write modes through the write terminal W of a read/write mode switch 16 to emit a high intensity-modulated beam and is driven by a constant potential coupled from a bias source 17 during read modes when switch 16 is turned to the read terminal R. A switch 18 is ganged to switch 16 to apply a constant potential to the laser diode 14 during write modes. Light emitted by laser diode 13 has a wavelength of 780 nm and is brought to a focus on the underside of disk 11 to form a tiny light spot 23. On the other hand, light emitted by laser diode 14 has a wavelength of 830 nm and is focused in a manner as will be described to form a light spot 24 which is elongated in the direction of rotation of disk 11 and located in a position forwardly of the read/write spot 23.

A photodiode array 19 is located in alignment with the horizontal optical axis 12b to receive light reflected on the surface of disk 11 and converts it to a corresponding electrical signal which is supplied to a detector circuit 20 of a known construction. Detector circuit 20 detects the data signal and derives tracking and focus servo control signals for coupling to a radial actuator 21 and focus actuator 22, respectively. Radial actuator 21 corrects the lateral position of lens unit 12 to keep it on track and focus actuator 22 keeps the lens unit 12 in focus on the disk surface.

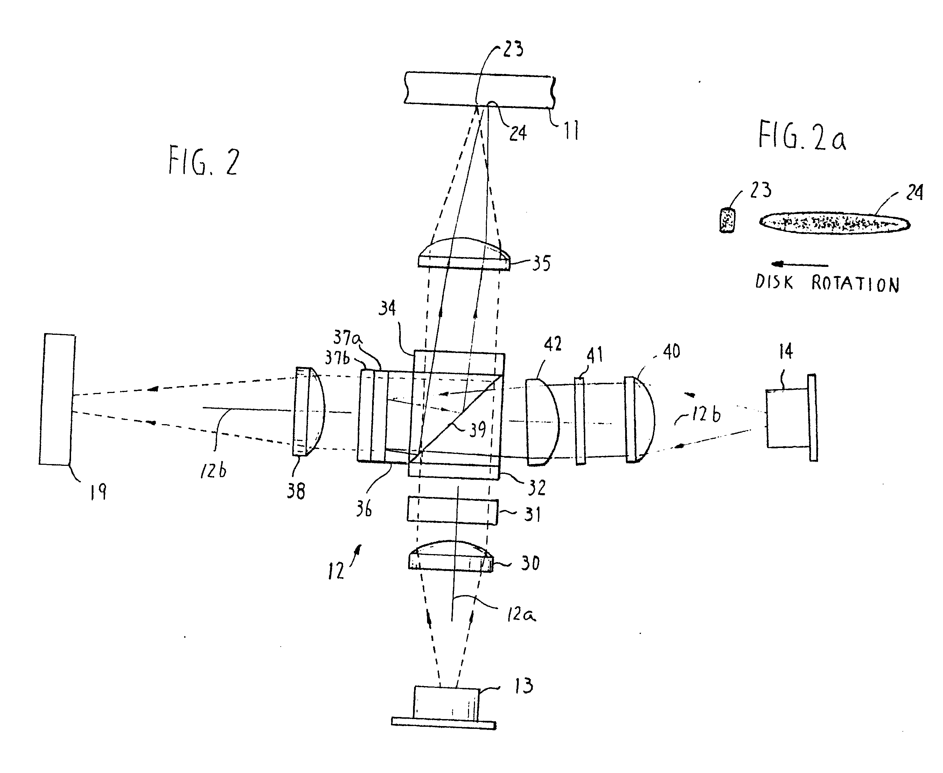

As shown in detail in Fig. 2, the 780-nm laser beam from diode 13 is collimated by a collimating lens 30 into a beam having an elliptical cross-section with the major axis elongated in a direction parallel to the surface of the drawing sheet and a polarization plane oriented in a direction parallel to the minor axis of the elliptical cross-section. The collimated beam is passed through a half-wavelength plate 31 to change its polarization plane by 90 degrees to allow it pass through a dichroic mirror 32 and a beam splitter 33 without reflection on its reflecting plane 39 to a quarter-wavelength plate 34 where it undergoes a $45^\circ$ rotation on polarization plane and is finally brought to a focus by an objective lens 35. Since the beam's cross-section is elongated in one direction, the optical energies distributed along the major axis are sharply focused by the full focusing power of lens 35 while the optical energies distributed along the minor axis are focused by the central portion of lens 35 to produce a light spot 23 which elongates in the direction of the minor axis of the incident beam as clearly shown in Fig. 2a. Light rays reflecting on the surface of disk 11 are picked up by objective lens 35 and undergoes a further 45° rotation on polarization plane by quarter-wavelength plate 34, so that the returning light is reflected on the reflecting plane 39 at right angles to the left and passes through a quarter-wavelength plate 36 and a pair of dichroic mirrors 37a, 37b. Dichroic mirrors 37a, 37b allow the 780-nm light to pass through to an objective lens 38 by which it is focused on photodiode array 19 and reflect those having wavelengths other than 780-nm.

The 830-nm erasing laser beam from diode 14 has its polarization plane oriented in a direction parallel to the surface of the drawing sheet and is passed through a unit comprising a collimating lens 40, a dichroic mirror 41 and a convexed cylindrical lens 42, all of which has a common optical axis which is slightly tilted upward with respect to the horizontal optical axis 12b. Laser beam from diode 14 is formed into a parallel beam by a collimating lens 40 and passed through a dichroic mirror 41 and a cylindrical lens 42 to the beam splitter 33 where a greater proportion of the incident optical energies passes through the reflecting plane 39 and quarter-wavelength plate 36 and reflects on the dichroic mirrors 37a and 37b back through the quarter-wavelength plate 36 to the reflecting plane 39 where it is reflected upward and focused by objective lens 35 to form a light spot 24 which is elongated in the direction of rotation of disk 11 as shown in Fig. 2a. Light spot 24 has a Gaussian distribution of optical energies both in the longitudinal and transversal directions. This is particularly advantageous for heating the erasable disk and gradually cooling it off to control the reversals of the phase-changing material. As the beam passes through plane 39 leftwards a very small proportion of the erase beam may be reflected on plane 39 downward. Dichroic mirror 32, which allows the read/write beam from laser diode 13 to pass through it, prevent the small proportion of the erase beam from entering the laser diode 13. The purpose of dichroic mirror 41 is to prevent the laser diode 14 from be irradiated by the 780-nm beam from laser diode 13 to avoid interference.

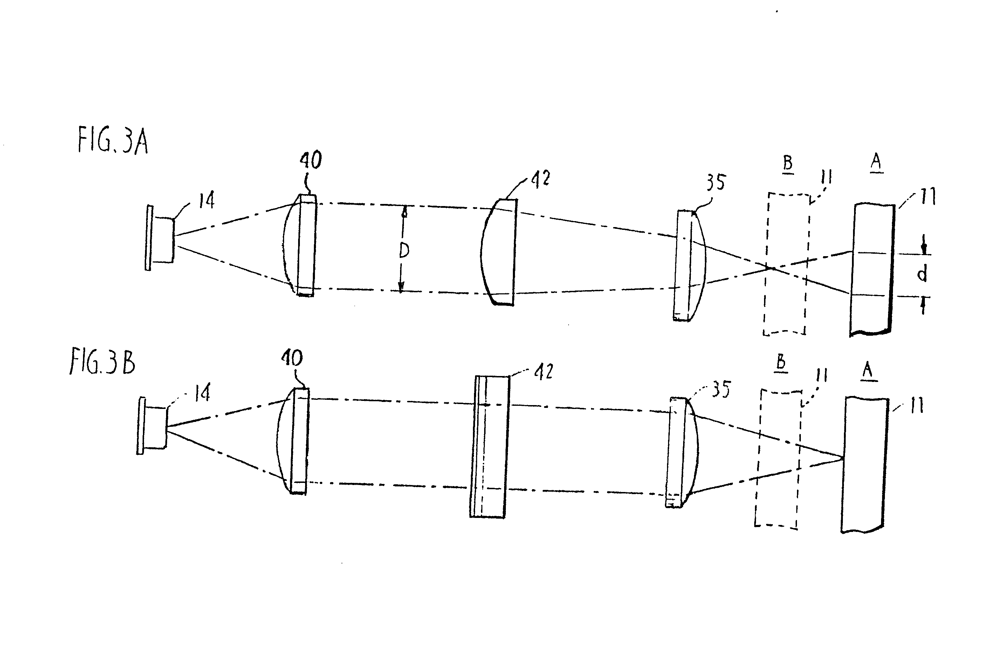

The elongation of the erase beam is performed by the combined focusing power of cylindrical lens 42 and objective lens 35.  The present invention will best be understood with reference to Figs. 3A and 3B.

Fig. 3A schematically shows in elevation the optical arrangement by which the erase beam is defocused in the direction of elongation and Fig. 3B schematically shows in plan the same arrangement by which the beam is focused, wherein the beam splitter 32 and dichroic mirror 41 are omitted for purposes of clarity.

More specifically, the parallel erase beam collimated by lens 40 is successively converged by cylindrical lens 42 and objective lens 35.  Objective lens 35 is so positioned that without cylindrical lens 42 the erase beam would be sharply brought to a focus on the disk 11.  Therefore, the erase beam is sharply focused on disk 11 as viewed in the direction perpendicular to the direction of elongation as shown in Fig. 3B and is made out of focus on disk 11 as shown at Fig. 3A when disk 11 is located in a position A. The length "d" of the elongated beam is exclusively determined by $D \cdot f_1/f_2$, where D is the width of the parallel beam in the direction of elongation and $f_1$ and $f_2$ are the focal lengths of objective lens 35 and cylindrical lens 42, respectively.  An elongated light spot having a length "d" 100 times as large as its width can be obtained.  Since the length "d" is independent of the location of the cylindrical lens 42, a desired length of elongation can be obtained by choosing an appropriate value for focal length $f_1$.

It is seen that the elongated light spot can also be formed by locating the disk 11 in a position B as indicated by dotted line. In this case, the lens unit 12 must be turned 90 degrees about its vertical optical axis with respect to disk 11 to align the direction of elongation of the light spot with the tracks. It is preferred, however, that disk 11 be located in position A since this arrangement allows focal distance to be adjusted with ease and allows cylindrical lens 42 to be positioned without strict optical considerations, and hence design flexibility.

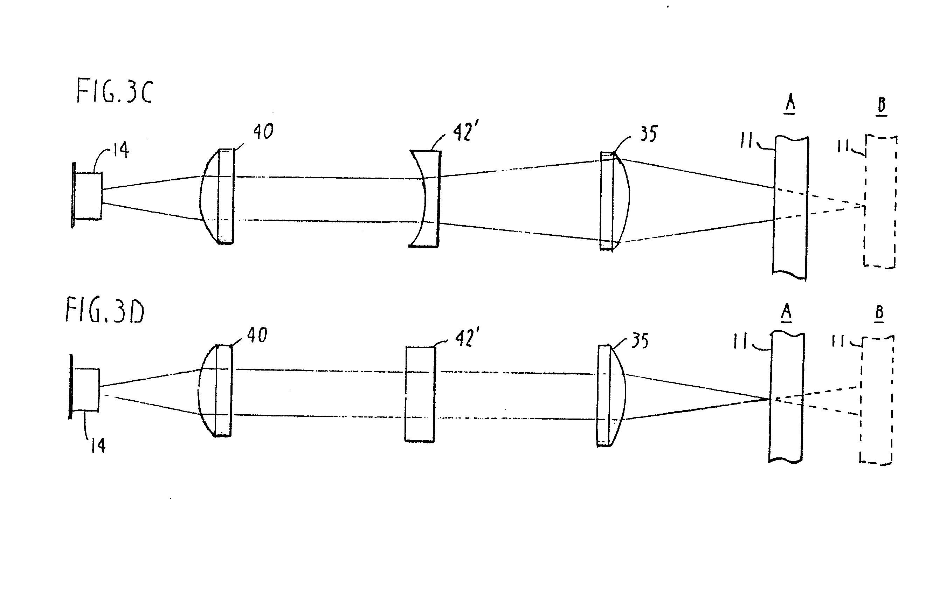

While mention has been made of a convexed cylindrical lens, a concaved cylindrical lens could equally be as well used as shown in Figs. 3C and 3D. In Figs. 3C, a concaved cylindrical lens 42' is used instead of the convexed cylindrical lens 42. Lens 42' is arranged to diverge the parallel light incident thereon to the objective lens 35 so that the beam is out of focus on disk 11 which is located in position A. As seen in Fig. 3D the parallel beam passes through lens 42' without changing its course and is focused on disk 11 (in position A) by lens 35 in a direction perpendicular to the direction in which it is defocused. Disk 11 may be located in position B to focus the beam in the direction as seen in Fig. 3C and defocus it in the direction as seen in Fig. 3D.

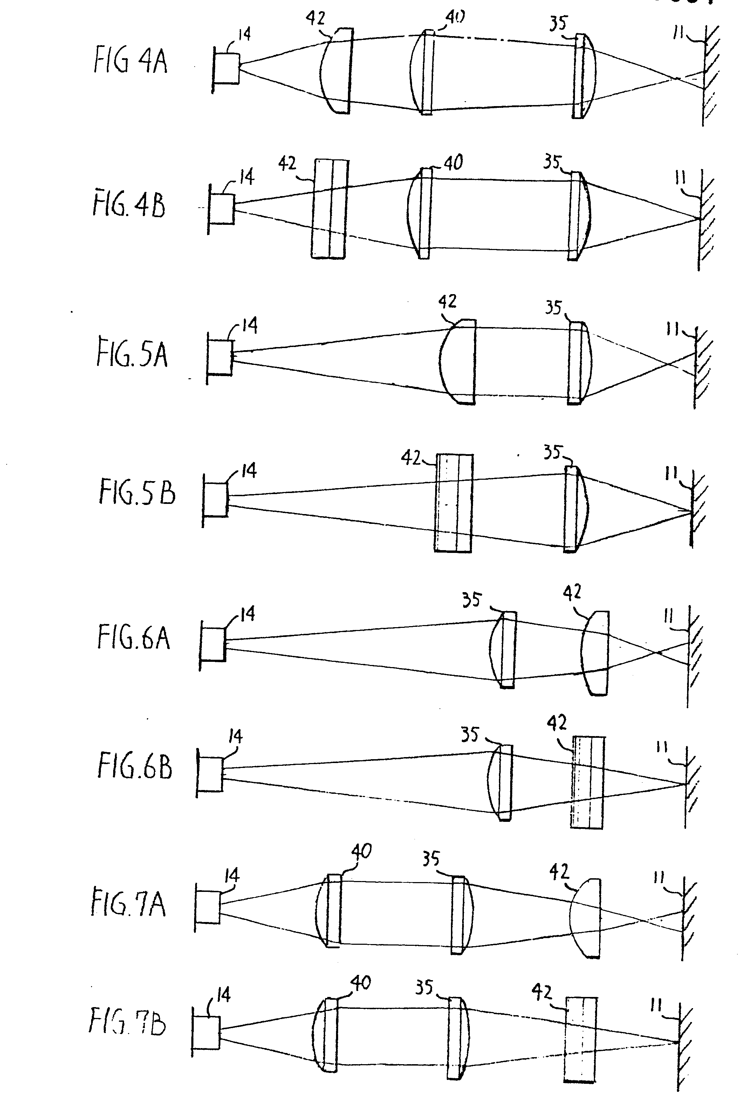

Various modifications of the erase beam forming optical arrangement are possible as shown in Figs. 4A to 7B.

In Figs. 4A and 4B, the arrangement differs from the previous embodiment in that collimating lens 40 and cylindrical lens 42 are interchanged with each other in respective positions. As in the previous embodiment, cylindrical lens 42, collimating lens 40 and objective lens 35 combine to defocus on disk 11 (Fig. 4A) while collimating lens 40 and objective lens 35 combine to form a focus on disk 11 as viewed in a direction perpendicular to the direction of elongation of the defocused light spot (Fig. 4B).

Collimating lens 40 can be dispensed with as shown in Figs. 5A and 5B, in which the objective lens 35 is the focusing lens. The positions of these lenses can be interchanged with each other as shown in Figs. 6A and 6B. The arrangement shown in Figs. 7A and 7B is similar to that shown in Figs. 3A and 3B with the exception that cylindrical lens 42 and objective lens 35 are interchanged in their positions.

The modifications of Figs. 4A to 5B permit the same objective lens to be shared with the read/write beam lens system, while the modifications of Figs. 6A to 7B are advantageous for forming an erase beam independently of the read/write beam lens system.

0187664

The foregoing description shows only preferred embodiments of the present invention. Various modifications are apparent to those skilled in the art without departing from the scope of the present invention which is only limited by the appended claims. Therefore, the embodiments shown and described are only illustrative, not restrictive.

- 14 -

0187664

WHAT IS CLAIMED IS:

1.   An arrangement for optically erasing information recorded on erasable optical disks, comprising a laser, a cylindrical lens and an objective lens, said objective lens being arranged to focus a laser beam emitted from said laser on said disk in a first direction and said cylindrical lens being arranged to defocus said laser beam on said disk in a second direction perpendicular to the first direction and parallel to the direction of rotation of said disk.

2.   An arrangement as claimed in claim 1, wherein said cylindrical and objective lenses are located with respect to said disk so that said laser beam is focused in said second direction at a point spaced from the near side of said disk.

3.   An apparatus for writing signals on an erasable optical disk, comprising:

a first laser for emitting an information-bearing write beam;

means for focusing said write beam on said disk to form a first, information-bearing beam spot thereon;

a second laser for emitting an erase beam; and

a cylindrical lens and an objective lens located in the path of said erase beam, said objective lens being arranged to focus said erase beam on said disk in a first direction and said cylindrical lens being arranged to defocus said beam on said disk in a second direction perpendicular to said first direction to form a second, elongated light spot adjacent the first beam spot, the direction of elongation of said second light spot being parallel to the direction of rotation of said disk.

4.    An apparatus as claimed in claim 3, wherein said cylindrical lens and objective lens are located with respect to said recording surface so that said erase beam is focused in said second direction at a point spaced from the near side of said disk.

5.    An apparatus for writing signals on an erasable optical disk, comprising:

a first laser for emitting an information bearing write beam for writing information on said disk;

a collimating lens located in the path of said write beam;

a second laser for emitting an erase beam in a direction perpendicular to the direction of path of said write beam;

a cylindrical lens located in the path of said erase beam;

a beam splitter located at an intersection of the paths of said write and erase beams for combining said write beam leaving said collimating lens with said erase beam leaving said cylindrical lens and directing the combined beams toward said disk; and

a objective lens located adjacent said disk for focusing said write beam thereon to form a first beam spot,

said objective lens being arranged to focus said erase beam on said disk in a first direction and said cylindrical lens being arranged to defocus said erase beam on said disk in a second direction perpendicular to said first direction to form a second, elongated beam spot on said disk adjacent said first beam spot, the direction of elongation of the second beam spot being parallel to the direction of rotation of said disk.

6.    An apparatus as claimed in claim 5, wherein said cylindrical lens and objective lens are located with respect to said disk so that said erase beam is focused in said second direction at a point spaced from the near side of said disk.

7.    A read/write apparatus for exchanging signals with an erasable optical disk, comprising:

means including a first laser for emitting an information bearing laser beam during a write mode and emitting a read laser beam during a read mode;

a collimating lens located in the path of the beam emitted from said first laser;

means including a second laser for emitting an erase beam during said write mode;

a cylindrical lens located in the path of said erase beam;

a beam splitter for combining the beam leaving said collimating lens with the beam leaving said cylindrical lens, directing the combined beams toward said disk and redirecting light returning from said disk;

a first objective lens located adjacent said disk for focusing the combined beams on said disk;

a quarter-wavelength plate located in the path of said combined beams to cause light returning from said disk to be redirected by said beam splitter;

a second objective lens located in the path of said redirected light; and

a photodetector located adjacent said second objective lens,

said objective lens being arranged to focus said erase beam on said disk in a given direction and said cylindrical lens being arranged to defocus said erase beam on said disk in a direction perpendicular to said given direction to form an elongated light spot on said disk adjacent the light spot formed by said write beam, said light spot being elongated in the direction of rotation of said disk.

8.    A read/write apparatus as claimed in claim 7, wherein said beam splitter has a single plane of reflection, and wherein said erase beam has a different wavelength than the wavelength of the beam emitted by said first laser, further comprising:

a second quarter-wavelength plate located in the path of said redirected light; and

a dichroic mirror located adjacent said second quarter-wavelength plate for allowing said redirected light to pass therethrough to said second objective lens and allowing said erase beam passing through said beam splitter and second quarter-wavelength plate to reflect back to said beam splitter and bend its way on said reflection plane toward said disk.

9.    A read/write apparatus as claimed in claim 7, wherein said cylindrical lens and first objective lens are located with respect to said disk so that said erase beam is focused in said given direction at a point spaced from the near side of said disk.

FIG.1

DISK

DETECTOR CIRCUIT — 20

DATA

RADIAL ACTUATOR — 21

FOCUS ACTUATOR — 22

CONSTANT BIAS — 17

WRITE CIRCUIT — 15

DATA

FIG. 2

FIG. 2a

DISK ROTATION

FIG.3A

40 42 35 $\underline{B}$ 11 $\underline{A}$

14 11

D d

FIG.3B

40 42 35 $\underline{B}$ 11 $\underline{A}$

14 11

FIG.3C

FIG.3D

0187664    5/5

FIG 4A

FIG. 4B

FIG. 5A

FIG. 5B

FIG. 6A

FIG. 6B

FIG. 7A

FIG. 7B